# EUROPEAN PATENT APPLICATION

(11) **EP 4 455 180 A1**
(43) Date of publication of application: **30.10.2024**
(21) Application number: 22910575.4
(22) Date of filing: 26.10.2022
(51) Int. Cl.: C08G 59/02, C08K 5/057, C08L 101/10, C08L 63/00

(54) **TWO-PART CURABLE RESIN COMPOSITION AND CURED PRODUCT THEREOF**

(30) Priority: 20.12.2021 JP 2021206146
(71) Applicant: ThreeBond Co., Ltd., Tokyo 192-0398 (JP)
(72) Inventor: SOGA, Tetsunori, Hachioji-shi, Tokyo 192-0398 (JP)
(74) Representative: Crow, Martin
(86) International application number: PCT/JP2022/039868
(87) International publication number: WO 2023/119854

(57) **Abstract**

An object of the present invention is to provide a two-part curable resin composition having excellent room temperature curability and capable of suppressing coloring of a cured product.

A two-part curable resin composition containing the following agents A and B:
the agent A: a composition containing a component (a) and a component (b)
the component (a): an epoxy resin having two or more epoxy groups in one molecule
the component (b): an alkoxide-based aluminum catalyst
the agent B: a composition containing a component (c) and a component (d)
the component (c): an organic polymer having two or more hydrolyzable silyl groups
the component (d): a curing agent for the component (a).

## Description

### TECHNICAL FIELD

The present invention relates to a two-part curable resin composition.

### BACKGROUND ART

Conventionally, an epoxy resin is excellent in adhesive strength, sealing properties, high strength, heat resistance, electrical properties, and chemical resistance, and thus has been used in various use applications such as an adhesive, an encapsulant, a sealant, a potting agent, a coating agent, and an electrically conductive paste. However, a cured product of such an epoxy resin exhibits tough mechanical strength, but has a problem of poor extensibility.

Therefore, a modified silicone resin is blended for the purpose of imparting extensibility to an epoxy resin. As such a technique, Patent Literature 1 discloses a two-part curable resin composition containing an epoxy resin, a titanium chelate as a curing catalyst, a modified silicone-based polymer, and an epoxy resin curing agent.

### Citation List

### Patent Literature

Patent Literature 1: JP 2007-270010 A

### SUMMARY OF INVENTION

### Technical Problem

However, the two-part curable resin composition disclosed in Patent Literature 1 has favorable room temperature curability, but has a problem in that the color is changed from white before curing to yellow after curing as shown in Comparative Example 1 of the specification of the present application.

An object of the present invention is to provide a two-part curable resin composition having excellent room temperature curability and capable of suppressing coloring of a cured product.

### Solution to Problem

The gist of the present invention will be described below. In an embodiment of the present invention, the present invention overcomes the conventional problems described above.

[1] A two-part curable resin composition containing the following agents A and B:
   the agent A: a composition containing a component (a) and a component (b)
   the component (a): an epoxy resin having two or more epoxy groups in one molecule
   the component (b): an alkoxide-based aluminum catalyst
   the agent B: a composition containing a component (c) and a component (d)
   the component (c): an organic polymer having two or more hydrolyzable silyl groups
   the component (d): a curing agent for the component (a).
[2] The two-part curable resin composition according to [1], wherein the component (a) is a hydrogenated epoxy resin having two or more epoxy groups in one molecule as a component (a-1) or a bisphenol-type epoxy resin having two or more epoxy groups in one molecule as a component (a-2).
[3] The two-part curable resin composition according to [1] or [2], wherein the hydrolyzable silyl group in the component (c) is a dimethoxysilyl group or a trimethoxysilyl group.
[4] The two-part curable resin composition according to any one of [1] to [3], wherein when the agent B is mixed in a range of 10 to 300 parts by mass with respect to 100 parts by mass of the agent A, an amount of the component (c) is 10 to 250 parts by mass with respect to 100 parts by mass of the component (a).
[5] The two-part curable resin composition according to any one of [1] to [4], wherein the component (d) is an amine compound that is a liquid at 25°C.
[6] The two-part curable resin composition according to any one of [2] to [5], wherein a mass ratio of the component (a-1) and the component (a-2) is 20 : 80 to 80 : 20.
[7] A cured product obtained by curing the two-part curable resin composition according to any one of [1] to [6].

### Advantageous Effects of Invention

The two-part curable resin composition of the present invention has excellent room temperature curability and is capable of suppressing coloring of a cured product.

### DESCRIPTION OF EMBODIMENTS

Hereinafter, the present invention will be described in detail. In the present specification, "X to Y" is used to mean that the first and last numerical values (X and Y) are included as a lower limit value and an upper limit value, and means "X or more and Y or less". When a plurality of "X to Y" are described, for example, when "X1 to Y1, or X2 to Y2" is described, the disclosure of each numerical value as the upper limits, the disclosure of each numerical value as the lower limits, and the disclosure of the combination of those upper and lower limits are all included (that is, the lawful basis for the amendment). Specifically, the amendment to X1 or more, amendment to Y2 or less, amendment to X1 or less, amendment to Y2 or more, amendment to X1 to X2, amendment to X1 to Y2, or the like should all be considered legal. In the meaning of "at least one selected from the group consisting of A, B, C, and...", in addition to the meaning of "A only, B only, C only, A and B, B and C, A and C, A, B, and C,...", when at least one of A, B, C, and... has a subordinate concept, it is not necessary to select all of the subordinate concept of A, the subordinate concept of B, the subordinate concept of C, and..., and it goes without saying that only one of the subordinate concepts may be selected. Unless otherwise specified, operations and measurements of physical properties and the like are measured under the conditions of room temperature (20 to 25°C)/relative humidity of 40 to 50% RH.

The present invention relates to a two-part curable resin composition containing an agent A, which is a composition containing a component (a) and a component (b) described below, and an agent B, which is a composition containing a component (c) and a component (d) described below. Respective components are as follows.

### <Component (a)>

The component (a) of the present invention is an epoxy resin having two or more epoxy groups in one molecule. The number of epoxy groups in the epoxy resin in one molecule may be 6 or less, 4 or less, or 3 or less.

Examples of the component (a) include, but are not particularly limited to, a hydrogenated epoxy resin having two or more epoxy groups in one molecule as a component (a-1) or a bisphenol-type epoxy resin having two or more epoxy groups in one molecule as a component (a-2), and the like, the component (a-1) is preferably contained, and particularly preferably, the component (a-1) and the component (a-2) are used in combination with other components of the present invention, thereby having an effect that room temperature curability is excellent and coloring of a cured product can be suppressed. When the component (a-1) and the component (a-2) are used in combination in the present invention, an "epoxy resin having two or more epoxy groups in one molecule other than the component (a-1) and the component (a-2)" may be further contained.

Examples of the component (a-1) include, but are not particularly limited to, hydrogenated bisphenol-type epoxy resins such as a hydrogenated bisphenol A-type epoxy resin, a hydrogenated bisphenol F-type epoxy resin, and a hydrogenated bisphenol E-type epoxy resin; hydrogenated cresol novolac-type epoxy resins; hydrogenated phenol novolac-type epoxy resins; and the like, and among them, hydrogenated bisphenol-type epoxy resins are preferable because they are excellent in room temperature curability and can suppress coloring of a cured product. The component (a-1) may be used singly or as a mixture of two or more kinds thereof.

In one embodiment of the present invention, the (total) content ratio (mass%) of the hydrogenated bisphenol-type epoxy resin in the component (a-1) may be 80 mass% or more, 85 mass% or more, 90 mass% or more, 95 mass% or more, 98 mass% or more, or 100 mass%.

Examples of commercially available products of the component (a-1) include, but are not limited to, YX8000 and YX8034 (manufactured by Mitsubishi Chemical Group Corporation), HBE-100 (manufactured by New Japan Chemical Co., Ltd.), ST-3000 (manufactured by NIPPON STEEL Chemical & Material Co., Ltd.), and the like. These may be used singly or as a mixture of two or more kinds thereof.

Examples of the component (a-2) include, but are not particularly limited to, a bisphenol A-type epoxy resin, a bisphenol F-type epoxy resin, a bisphenol S-type epoxy resin, a bisphenol AD-type epoxy resin, and the like, and among these, a bisphenol A-type epoxy resin is preferable because it can suppress particularly coloring of a cured product. These compounds may be used singly or as a mixture of two or more kinds thereof. According to one embodiment of the present invention, the bisphenol-type epoxy resin as the component (a-2) is not hydrogenated.

The (total) content ratio (mass%) of the bisphenol A-type epoxy resin in the component (a-2) may be 80 mass% or more, 85 mass% or more, 90 mass% or more, 95 mass% or more, 98 mass% or more, or 100 mass%.

Examples of commercially available products of the component (a-2) include, but are not limited to, jER825, 827, 828, 828US, 834, 1001, 806, and 807 (manufactured by Mitsubishi Chemical Group Corporation); EPICLON 840, 850, 830LVP, EXA850CRP, 835, and EXA835LV (manufactured by DIC Corporation); EP4100 and EP4400 (manufactured by ADEKA Corporation); and the like. These may be used singly or as a mixture of two or more kinds thereof.

A mass ratio of the component (a-1) and the component (a-2) is not particularly limited, and is, for example, a range of 20 : 80 to 80 : 20, preferably a range of 25 : 75 to 75 : 25, and more preferably a range of 35 : 75 to 75 : 35. Within the above range, a cured product having higher elongation and higher strength can be obtained.

In one embodiment of the present invention, the content ratio (mass%) (the total content ratio when there are two or more kinds are used) of the hydrogenated epoxy resin having two or more epoxy groups in one molecule and/or the bisphenol-type epoxy resin having two or more epoxy groups in one molecule in the component (a) may be 80 mass% or more, 85 mass% or more, 90 mass% or more, 95 mass% or more, 98 mass% or more, or 100 mass%.

In one embodiment of the present invention, the amount of the component (a) added may be 80 to 120 parts by mass, 85 to 115 parts by mass, 90 to 110 parts by mass, or 95 to 105 parts by mass, with respect to 100 parts by mass of the component (c) described below.

In one embodiment of the present invention, the content ratio (mass%) of the component (a) in the agent A may be 85 mass% or more, 90 mass% or more, 92 mass% or more, or 94 mass% or more. The content ratio (mass%) of the component (a) in the agent A may be 99 mass% or less, 98 mass% or less, or 97 mass% or less. The content ratio (mass%) of the component (a) in the agent A may be 85 to 99 mass%, 90 to 98 mass%, or 94 to 97 mass .

### <Component (b)>

The component (b) of the present invention is an alkoxide-based aluminum compound (that is, alkoxide-based aluminum catalyst). Among catalysts, the component (b) of the present invention is selected and combined with the other components of the present invention, thereby having a remarkable effect that room temperature curability is excellent and coloring of a cured product can be suppressed.

A chelate-based aluminum catalyst is handled as not the component (b) of the present invention. Examples of such a chelate-based aluminum catalyst include aluminum alkylacetoacetate diisopropylate and the like. In one embodiment of the present invention, the alkoxide-based aluminum catalyst does not include a chelate-based aluminum catalyst.

In one embodiment of the present invention, the alkoxide-based aluminum catalyst may be represented by general formula: Al(OR¹)(OR²)(OR³), wherein R¹, R², and R³ are each independently a linear, branched, or cyclic alkyl group. The number of carbon atoms of the alkyl group may be, for example, 1 to 10, 2 to 9, 3 to 8, 4 to 7, 4 to 6, or 4 or 5. R¹, R², and R³ are each independently preferably a branched alkyl group. In the case of a branched alkyl group, compatibility with the component (A) is improved, and storage stability can be improved. Examples of the alkyl group having 1 to 10 carbon atoms include methyl, ethyl, n-propyl, i-propyl, c-propyl, n-butyl, i-butyl, s-butyl, t-butyl, c-butyl, n-pentyl, c-pentyl, n-hexyl, c-hexyl, n-heptyl, n-octyl, n-nonyl, n-decyl groups, and the like. Among them, a branched alkyl group such as t-butyl is preferable.

Examples of the component (b) include, but are not particularly limited to, aluminum trisecondary butoxide, aluminum diisopropylate mono-sec-butyrate, aluminum isopropylate, aluminum ethylate, and the like, among them, aluminum trisecondary butoxide, aluminum isopropylate, and aluminum ethylate are preferable, and aluminum trisecondary butoxide and aluminum isopropylate are particularly preferable. These may be used singly or in combination of two or more kinds thereof. Examples of commercially available products of the component (b) include, but are not particularly limited to, ORGATIX AL-3001 (manufactured by Matsumoto Fine Chemical Co., Ltd.), AMD, ASBD, AIPD, PADM, and Aluminum ethoxide (Kawaken Fine Chemicals Co., Ltd.), and the like.

As the amount of the component (b) added, the amount of the component (b) is in a range of 0.1 to 20 parts by mass, more preferably 0.5 to 15 parts by mass, and particularly preferably 1 to 10 parts by mass, and may be in a range of 2 to 9 parts by mass, 3 to 8 parts by mass, 3 to 7 parts by mass, 3 to 6 parts by mass, or 3 to 5 parts by mass, with respect to 100 parts by mass of the component (c) described below. Within the above range, it is possible to obtain a two-part curable resin composition having further excellent room temperature curability and capable of suppressing coloring of a cured product.

In one embodiment of the present invention, the content ratio (mass%) of the component (b) in the agent A may be 15 mass% or less, 10 mass% or less, 8 mass% or less, or 6 mass% or less. The content ratio (mass%) of the component (b) in the agent A may be 1 mass% or more, 2 mass% or more, or 3 mass% or more. The content ratio (mass%) of the component (b) in the agent A may be 1 to 10 mass%, 2 to 8 mass%, or 3 to 6 mass%.

In one embodiment of the present invention, the total content ratio (mass%) of the component (a) and the component (b) in the agent A may be 80 mass% or more, 85 mass% or more, 90 mass% or more, 95 mass% or more, 98 mass% or more, or 100 mass%.

### <Component (c)>

The component (c) of the present invention is an organic polymer having two or more hydrolyzable silyl groups. In one embodiment of the present invention, the component (c) of the present invention is an organic polymer having 6 or less, 4 or less, or 3 or less hydrolyzable silyl groups.

In one embodiment of the present invention, the hydrolyzable silyl group is a group in which one, two, or three hydrolyzable groups are bonded to a silicon atom. In one embodiment of the present invention, examples of the hydrolyzable group include a hydrogen atom, a halogen atom, an alkoxy group, an acyloxy group, a ketoximate group, an amino group, an amide group, an acid amide group, an aminooxy group, a mercapto group, an alkenyloxy group, and the like. In one embodiment of the present invention, an alkoxysilyl group is suitable as the hydrolyzable silyl group.

In one embodiment of the present invention, alkoxy in the alkoxysilyl group is linear, branched, or cyclic, and is particularly preferably linear from the viewpoint of room temperature curability. The number of carbon atoms in the alkoxy may be, for example, 1 to 6, 1 to 5, 1 to 4, 1 to 3, or 1 or 2.

Examples of the component (c) include an organic polymer having a dimethoxysilyl group, an organic polymer having trimethoxysilyl group, an organic polymer having a diethoxysilyl group, and an organic polymer having a triethoxysilyl group, and among them, an organic polymer having a trimethoxysilyl group is preferable.

In one embodiment of the present invention, an organic polymer having two or more hydrolyzable silyl groups, each of which has one or two hydrolyzable groups (for example, alkoxy groups) and an organic polymer having two or more hydrolyzable silyl groups, each of which has three hydrolyzable groups (for example, alkoxy groups) are used in combination. From the viewpoint of obtaining a two-part curable resin composition having further excellent room temperature curability and capable of suppressing coloring of a cured product, it is particularly preferable to use an organic polymer having a trimethylsilyl group or to use an organic polymer having a dimethoxysilyl group and an organic polymer having a trimethoxysilyl group in combination. In such a combination form, the mass ratio of the organic polymer having two or more hydrolyzable silyl groups, each of which has one or two hydrolyzable groups (for example, alkoxy groups) and the organic polymer having two or more hydrolyzable silyl groups, each of which has three hydrolyzable groups (for example, alkoxy groups) is not particularly limited, but is, for example, in a range of 20 : 80 to 80 : 20, preferably in a range of 25 : 75 to 75 : 25, and more preferably in a range of 35 : 65 to 65 : 35.

The hydrolyzable silyl group of the component (c) may be bonded to the terminal or side chain of the organic polymer, but is preferably bonded to the terminal from the viewpoint of obtaining a cured product having high elongation and high strength. The component (c) is preferably a liquid at 25°C from the viewpoint of handleability. The component (c) may be used singly or as a mixture of two or more kinds thereof.

The structure of the organic polymer of the above component (c) is not particularly limited, and examples thereof include structures of polyoxyalkylene, polyester, polycarbonate, polyurethane, polyamide, polyurea, polyimide, polyethylene, polypropylene, polyisobutylene, a (meth)acrylic polymer, polystyrene, polyvinyl chloride, polybutadiene, polyisoprene, polyvinyl butyral, polyvinyl ether, and the like. Among them, from the viewpoint of obtaining a two-part curable resin composition having further excellent room temperature curability and capable of suppressing coloring of a cured product, a structure of polyoxyalkylene, polyisobutylene, or a (meth)acrylic polymer is preferable. A mixture of two or more kinds thereof may be used.

In one embodiment of the present invention, in the case the component (c) is a mixture of two or more kinds of an organic polymer, which is a polyoxyalkylene having two or more hydrolyzable silyl groups and an organic polymer having two or more hydrolyzable silyl groups other than the polyoxyalkylene, the content ratio (mass%) (the total content ratio when there are two or more kinds are used) of the polyoxyalkylene having two or more hydrolyzable silyl groups may be 80 mass% or more, 85 mass% or more, 90 mass% or more, 95 mass% or more, 98 mass% or more, or 100 mass .

Examples of commercially available products of the polyoxyalkylene having two or more hydrolyzable silyl groups of the component (c) include SAT010, SAX115, SAT030, SAT030, SAT200, SAT350, SAT400, SAX220, SAX510, SAX530, SAX575, SAX580, SAX710, SAX720, SAX725, SAX750, SAX770, S203, S303, S203H, S303H, S943S, S911S, MA440, MA447, MA451, MA903, MA903M, MA904, S943, MAX923, MAX951, SAX510, SAX520, SAX530, SAX580, and the like (manufactured by KANEKA CORPORATION), and ES-S2410, ES-S2420, ES-S3430, ES-S3610, and ES-S3630 (manufactured by Asahi Glass Co., Ltd.). Examples of commercially available products of the (meth)acrylic polymer of the component (c) include SA100S, SA310S, OR100S, and the like (manufactured by KANEKA CORPORATION). Examples of commercially available products of the polyisobutylene having two or more hydrolyzable silyl groups of the component (c) include EP100S, EP103S, EP303S, EP505S, and the like (manufactured by KANEKA CORPORATION).

As the amount of the component (c) added, the amount of the component (c) is in a range of 10 to 250 parts by mass, more preferably 50 to 200 parts by mass, and particularly preferably 70 to 150 parts by mass, and may be 80 to 140 parts by mass, 85 to 130 parts by mass, or 95 to 110 parts by mass, with respect to 100 parts by mass of the component (a). Within the above range, it is possible to obtain a two-part curable resin composition having further excellent room temperature curability and capable of suppressing coloring of a cured product.

### <Component (d)>

The component (d) of the present invention is a curing agent for the component (a), and is a compound capable of curing the component (a). Specific examples of the component (d) include an amine compound, a polymercaptan compound, an acid anhydride compound, and the like, and among them, an amine compound is preferable because it is excellent in room temperature curability. A mixture of two or more kinds thereof may be used. The component (d) is preferably a liquid at 25°C from the viewpoint of curability and workability after mixing. The component (d) may be used singly or as a mixture of two or more kinds thereof.

Examples of the amine compound include a primary amine, a secondary amine, a tertiary amine, an amine adduct compound, a polyamide compound, an imidazole compound, and the like. Examples of the primary amine include an aliphatic primary amine, an alicyclic primary amine, an aromatic primary amine, and the like. Examples of the aliphatic primary amine include, but are not particularly limited to, ethylenediamine, diethylenetriamine, triethylenetetramine, hexamethylenediamine, and the like. Examples of the alicyclic primary amine include mensendiamine, isophoronediamine, N-aminoethylpiperazine, diaminodicyclohexylmethane, norbornanediamine, and the like. Examples of the aromatic primary amine include dimethylaminomethylphenol, meta-xylenediamine, meta-phenylenediamine, diaminodiphenylmethane, diaminodiphenyl sulfone, diaminodiethyl diphenylmethane, and the like.

In one embodiment of the present invention, the amine compound may be an aromatic amine having an aromatic ring. In one embodiment of the present invention, the amine compound may be a secondary amine or a tertiary amine. In one embodiment of the present invention, the amine compound may be an aromatic secondary amine or an aromatic tertiary amine. The number of carbon atoms of the alkyl in the secondary amine (aromatic secondary amine) or the tertiary amine (aromatic tertiary amine) may each independently be 1 to 5, 1 to 4, 1 to 3, or 1 or 2. The aromatic ring may have at least one selected from the group consisting of a hydroxyl group, a carboxy group, a halogen atom, and an alkyl group. In one embodiment of the present invention, the aromatic ring may have an alkylaminoalkylene group. The number of carbon atoms of the alkyl in the alkylaminoalkylene group may be 1 to 5, 1 to 4, 1 to 3, or 1 or 2. The number of carbon atoms of the alkylene in the alkylaminoalkylene group may be 1 to 5, 1 to 4, 1 to 3, or 1 or 2.

Examples of the secondary amine or the tertiary amine include, but are not particularly limited to, piperidine, pyridine, benzyldimethylamine, 2-(dimethylaminomethyl)phenol, triethylenediamine, dimethylcyclohexylamine, dimethylbenzylamine, dimethylhexylamine, dimethylaminophenol, dimethylamino p-cresol, piperidine, 1,4-diazadicyclo[2.2.2]octane, 2,4,6-tris(dimethylaminomethyl)phenol, 1.8-diazabicyclo[5.4.0]undecene-1, and the like. Examples of the imidazole include, but are not particularly limited to, 2-methylimidazole, 1,2-dimethylimidazole, 2-phenylimidazole, 2-undecylimidazole, 2-heptadecylimidazole, 1-isobutyl-2-methylimidazole, 2-phenyl-4-methylimidazole, 2-ethyl-4-methylimidazole, 1-benzyl-2-phenylimidazole, 1-benzyl-2-methylimidazole, 1-cyanoethyl-2-methylimidazole, 1-cyanoethyl-2-phenylimidazole, 1-cyanoethyl-2-undecylimidazole, 2,4-diamino-6(2'-methylimidazole(1'))ethyl-s-triazine, 2,4-diamino-6(2'-undecylimidazole(1'))ethyl-s-triazine, 2,4-diamino-6(2'-ethyl,4-methylimidazole(1'))ethyl-s-triazine, 2-phenyl-3,5-dihydroxymethylimidazole, 2-phenyl-4-hydroxymethyl-5-methylimidazole, 1-cyanoethyl-2-phenyl-3,5-dicyanoethoxymethylimidazole, and the like. Examples of commercially available products include K-54 (AIR PRODUCTS JAPAN K.K) and the like. As the secondary amine and the tertiary amine, a compound having an aromatic ring is preferable from the viewpoint of excellent curability.

In one embodiment of the present invention, the curing agent for the component (a) is an aromatic compound having an alkylaminoalkylene group. In one embodiment of the present invention, the curing agent for the component (a) may be a phenol compound having an alkylaminoalkylene group. In one embodiment of the present invention, the phenol compound may have one, two, or three alkylaminoalkylene groups. The number of carbon atoms of the alkyl and alkylene of the alkylaminoalkylene group is the same as those described above.

In one embodiment of the present invention, in the case of using an amine compound as the component (d), the content ratio (mass%) of the tertiary amine in the amine compound may be 80 mass% or more, 85 mass% or more, 90 mass% or more, 95 mass% or more, 98 mass% or more, or 100 mass%.

In one embodiment of the present invention, the content ratio (mass%) (the total content ratio when there are two or more kinds are used) of the above amine compound (an aromatic compound having an alkylaminoalkylene group) in the component (d) may be 80 mass% or more, 85 mass% or more, 90 mass% or more, 95 mass% or more, 98 mass% or more, or 100 mass%.

Examples of the amine adduct compound include those in which a tertiary amine or an imidazole compound is added to an epoxy resin to stop the reaction in the middle, and the like. It is most preferable to use a fine powder obtained by pulverizing an epoxy adduct compound, or the like in consideration of storage stability and curability. Examples of commercially available epoxy adduct-based compounds include AJICURE series manufactured by Ajinomoto Fine-Techno Co., Inc., Fujicure series manufactured by T&K TOKA Corporation, Novacure series manufactured by Asahi Kasei Corp., and the like.

Examples of the polymercaptan compound include, but are not particularly limited to, alkyl polythiols such as 3,3'-dithiodipropionic acid, trimethylolpropane tris(thioglycolate), pentaerythritol tetrakis(thioglycolate), ethylene glycol dithioglycolate, 1,4-bis(3-mercaptobutyryloxy)butane, tris[(3-mercaptopropionyloxy)-ethyl]-isocyanurate (TEMPIC), 1,3,5-tris(3-mercaptobutyloxyethyl)-1,3,5-triazine-2,4,6(1H,3H,5H)-trione, trimethylolpropane tris(3-mercaptopropionate) (TMMP), pentaerythritol tetrakis(3-mercaptopropionate) (PEMP), pentaerythritol tetrakis(3-mercaptobutylate), dipentaerythritol hexakis(3-mercaptopropionate) (DPMP), 1,4-butanedithiol, 1,6-hexanedithiol, and 1,10-decanedithiol; terminal thiol group-containing polythioethers; and the like.

Examples of the acid anhydride compound include, but are not particularly limited to, tetrahydrophthalic anhydride, methyltetrahydrophthalic anhydride, hexahydrophthalic anhydride, methylhexahydrophthalic anhydride, methylendoethylenetetrahydrophthalic anhydride, trialkyltetrahydrophthalic anhydride, methylnadic anhydride, phthalic anhydride, trimellitic anhydride, pyromellitic anhydride, maleic anhydride, and the like.

The amount of the component (d) added is in a range of 1 to 180 parts by mass, more preferably 3 to 140 parts by mass, and particularly preferably 5 to 100 parts by mass, and may be 6 to 50 parts by mass, 7 to 40 parts by mass, 8 to 30 parts by mass, 9 to 20 parts by mass, or 9 to 15 parts by mass, with respect to 100 parts by mass of the component (a). Within the above range, it is possible to obtain a two-part curable resin composition having excellent room temperature curability and capable of suppressing coloring of a cured product.

### <Optional component>

Additives such as a curing accelerator, a filler, various elastomers such as a styrene-based copolymer, a reactive diluent (monofunctional epoxy monomer), a silane coupling agent, a filling material, a storage stabilizer, an antioxidant, a flame retardancy imparting agent, a light stabilizer, a heavy metal deactivator, a plasticizer, an antifoaming agent, a pigment, a rust inhibitor, a leveling agent, a dispersant, a rheology modifier, a flame retardant, and a surfactant can be used for the present invention as long as the object of the present invention is not impaired.

According to one embodiment of the present invention, there is also provided a two-part curable resin composition containing: the following agents A and B, and at least one additive selected from the group consisting of a curing accelerator, a filler, an elastomer (for example, a styrene-based copolymer), a reactive diluent (for example, a monofunctional epoxy monomer), a silane coupling agent, a filling material, a storage stabilizer, an antioxidant, a flame retardancy imparting agent, a light stabilizer, a heavy metal deactivator, a plasticizer, an antifoaming agent, a pigment, a rust inhibitor, a leveling agent, a dispersant, a rheology modifier, a flame retardant, and a surfactant:
the agent A: a composition containing a component (a) and a component (b)
the component (a): an epoxy resin having two or more epoxy groups in one molecule
the component (b): an alkoxide-based aluminum catalyst
the agent B: a composition containing a component (c) and a component (d)
the component (c): an organic polymer having two or more hydrolyzable silyl groups
the component (d): a curing agent for the component (a).

A filling material may be added to the present invention for the purpose of improving the elastic modulus, fluidity, and the like of a cured product. Specific examples thereof include an organic powder, an inorganic powder, a metallic powder, and the like.

Examples of the filling material of the inorganic powder include glass, fumed silica, mica, ceramics, silicone rubber powder, calcium carbonate, carbon powder, kaolin clay, dry clay mineral, dry diatomaceous earth, and the like. Examples of the filling material of the organic powder include polyethylene, polypropylene, nylon, cross-linked acryl, cross-linked polystyrene, polyester, polyvinyl alcohol, polyvinyl butyral, and polycarbonate. Examples of the filling material of the metallic powder include gold, silver, copper, alumina, aluminum nitride, and the like. The amount of the filler blended is not particularly limited, but is 0.1 to 300 parts by mass with respect to 100 parts by mass of the component (a) in the case of blending the filler in the agent A, and is 0.1 to 300 parts by mass with respect to 100 parts by mass of the component (c) in the case of blending the filler in the agent B. Within the above range, a cured product having high elongation and high strength can be obtained, and workability is excellent.

The fumed silica is blended for the purpose of adjusting the viscosity of the two-part curable resin composition or improving the mechanical strength of a cured product. Preferably, fumed silica surface-treated with dimethylsilane, trimethylsilane, alkylsilane, methacryloxysilane, organochlorosilane, polydimethylsiloxane, hexamethyldisilazane, or the like is used. Examples of commercially available products of the fumed silica include AEROSIL R972, R972V, R972CF, R974, R976, R976S, R9200, RX50, NAX50, NX90, RX200, RX300, R812, R812S, R8200, RY50, NY50, RY200S, RY200, RY300, R104, R106, R202, R805, R816, T805, R711, RM50, R7200, and the like (manufactured by Nippon Aerosil Co., Ltd.), and TS720 (Cabot Corporation).

Examples of the storage stabilizer include tetrafunctional alkoxysilanes such as tetramethoxysilane and tetraethoxysilane, silicate compounds typified by methyltrimethoxysilane, methyltriethoxysilane, ethyl silicate, propyl silicate, and butyl silicate, and the like. These may be used singly or in combination of two or more kinds thereof.

The two-part curable resin composition of the present invention contains agents A and B, the agent A is a composition containing a component (a) and a component (b), and the agent B is a composition containing a component (c) and a component (d). By separating the components into separate liquids in this manner, unnecessary reactions can be suppressed during storage, and storage stability can be enhanced. Also in such a two-part curable resin composition, the respective liquids can be mixed and produced by the above method. In use, the two liquids are mixed and used. The amount of the agent B is in a range of 10 to 300 parts by mass, more preferably in a range of 30 to 200 parts by mass, and particularly preferably in a range of 50 to 150 parts by mass, with respect to 100 parts by mass of the agent A.

### <Cured product>

A cured product obtained by curing the two-part curable resin composition of the present invention is also one aspect of the invention.

### <Use application>

Since the two-part curable resin composition of the present invention is excellent in room temperature curability and can suppress coloring of a cured product, the two-part curable resin composition is preferably used for various use applications such as an adhesive, an encapsulant, a sealant, a potting agent, a coating agent, a lining material, a heat dissipation material, and an electrically conductive paste, and among them, the use application for a structural adhesive is preferable. Specific use applications of the structural adhesive are not particularly limited, and examples thereof include adhesion between panels constituting a door, a pillar, and a roof of an automobile, adhesion between a body and a roof, adhesion of a magnet of a motor, and the like.

### <Composite>

A composite bonded using the two-part curable resin composition of the present invention is also one embodiment of the present invention.

The two-part curable resin composition of the present invention is suitable for an adhesive. Examples of the adherend include, but are not particularly limited to, metals, metal and plastic, metal and rubber, metal and glass, plastic and rubber, plastic and glass, plastics, rubbers, rubber and glass, glasses, and the like, and among them, metals, metal and plastic, and plastics are preferable.

Examples of the metal include, but are not particularly limited to, gold, silver, iron, aluminum, magnesium, copper, stainless steel, titanium, and the like. Examples of the plastic include, but are not particularly limited to, fiber reinforced plastic (FRP), carbon fiber reinforced plastic (CFRP), polyacryl, polyester, polyamide, acrylonitrile-butadiene-styrene, nylon 6, polycarbonate, polyacetal, polyethylene terephthalate, polybutylene terephthalate, polyphenylene sulfide, polyphenylene ether, polyether ether ketone, polyethylene, polypropylene, and the like. Examples of the rubber include, but are not particularly limited to, nitrile rubber, butyl rubber, urethane rubber, silicone rubber, EPDM, and the like. Adhesion between at least two or more adherends selected from these adherends, and the like are exemplified. The surface of the material may be subjected to a surface treatment in advance, or may remain untreated.

### EXAMPLES

Hereinafter, the present invention will be described in more detail with reference to Examples, but the present invention is not limited to these Examples.

Test methods used in Examples and Comparative Examples are as follows.

### <Preparation of two-part curable resin composition>

Each component was collected in mass percentage shown in Table 1, and mixed with a mixer at normal temperature for 60 minutes to prepare each of agents A and B corresponding to a two-part curable resin composition. The detailed preparation amounts are in accordance with Table 1, and all numerical values are expressed in parts by mass.

### <Component (a)>

a1-1 (corresponding to the component (a-1)): hydrogenated bisphenol A-type epoxy resin (HBE-100 manufactured by New Japan Chemical Co., Ltd.)
a2-1 (corresponding to the component (a-2)): bisphenol A-type epoxy resin (jER828 manufactured by Mitsubishi Chemical Group Corporation)

### <Component (b) and comparative component>

b1: active ingredient amount of 99 mass% or more, aluminum tri secondary butoxide (AL-3001 manufactured by Matsumoto Fine Chemical Co., Ltd.)
b'1: aluminum-based chelate catalyst (DX-9740 manufactured by Shin-Etsu Chemical Co., Ltd.)
b'2: active ingredient amount of 75 mass% or more, titanium diisopropoxy bis(acetylacetonate) (TC-100 manufactured by Matsumoto Fine Chemical Co., Ltd.)
b'3: active ingredient amount of 99 mass% or more, titanium tetra-normal butoxide (TA-21 manufactured by Matsumoto Fine Chemical Co., Ltd.)
b'4: phosphoric acid-based catalyst (X-40-2309A manufactured by Shin-Etsu Chemical Co., Ltd.)

### <Component (c)>

c1: polyoxyalkylene containing dimethoxysilyl groups at both terminals, which is a liquid at 25°C (SAX-750 manufactured by KANEKA CORPORATION)
c2: polyoxyalkylene containing trimethoxysilyl groups at both terminals, which is a liquid at 25°C (SAX-575 manufactured by KANEKA CORPORATION)

### <Component (d)>

d1: 2,4,6-tridimethylaminomethylphenol, which is a liquid at 25°C (K-54 manufactured by AIR PRODUCTS JAPAN K.K).

Test methods in Examples and Comparative Examples in Table 1 are as follows.

### <(1) Appearance confirmation of cured product>

The agent A (100 g) and the agent B (100 g) of each two-part curable resin composition were mixed under an environment of 25°C. It was confirmed that the appearance of the mixed resin composition was white by visual inspection. Next, the mixed resin composition was put into a polyethylene container and cured by taking a time for 168 hours under an environment of 25°C and 50% RH to prepare a cured product. The appearance of the cured product was visually evaluated based on the following evaluation criteria. The results thereof are shown in Table 1.

### Evaluation criteria

⊚: A cured product is transparent or white and has no yellow or brown appearance as a whole.
∘: A cured product is transparent or white, but partially appears yellow or brown.
×: A cured product is yellow or brown as a whole.

### <(2) Confirmation of room temperature curability (tack free time)>

Each of the agent A (100 g) and the agent B (100 g) for two-part curable resin composition is mixed under an environment of 25°C. Next, the curable resin composition after mixing was applied to a glass test piece at a thickness of 250 µm, the surface of the curable resin composition after mixing was touched with a wooden bar every 5 minutes in an atmosphere of 25°C × 50% RH, and whether or not curing was performed was evaluated on the basis of the criterion that stickiness was eliminated. The timing at which curing was confirmed was defined as a tack free time (min). The results are shown in Table 1. The tack free time is preferably 3 to 140 minutes, particularly preferably in a range of 5 to 65 minutes, more particularly preferably 5 to 50 minutes, and further particularly preferably 7 to 25 minutes.

### <(3) Appearance confirmation of agent A before curing and (4) appearance confirmation of agent B before curing>

The appearance of the agents A and B before curing was visually evaluated.

**[Table 1]**

| | Component | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|
| Agent A | a1-1 | 50 | 100 | | 50 | 50 | 50 | 50 | 50 | 50 |
| | a2-1 | 50 | | 100 | 50 | 50 | 50 | 50 | 50 | 50 |
| | b1 | 4 | 4 | 4 | 4 | 4 | | | | |
| | b'1 | | | | | | 4 | | | |
| | b'2 | | | | | | | 4 | | |
| | b'3 | | | | | | | | 4 | |
| | b'4 | | | | | | | | | 4 |
| | Total amount | 104 | 104 | 104 | 104 | 104 | 104 | 104 | 104 | 104 |
| Agent B | c1 | 50 | 50 | 50 | 100 | | 50 | 50 | 50 | 50 |
| | c2 | 50 | 50 | 50 | | 100 | 50 | | 50 | 50 |
| | d1 | 10 | 10 | 10 | 10 | 10 | 10 | 10 | 10 | 10 |
| | Total amount | 110 | 110 | 110 | 110 | 110 | 110 | 60 | 110 | 110 |
| (1) Appearance confirmation of cured product | | ⊙ | ⊙ | ○ | ⊙ | ⊙ | × | × | × | ○ |
| (2) Confirmation of room temperature curability (tack free time) | | 20 min | 10 min | 30 min | 60 min | 20 min | 20 min | 150 min | 30 min | 1140 min |
| (3) Appearance confirmation of agent A before curing | | Transparent | Transparent | Transparent | Transparent | Transparent | Transparent | Yellow | Yellow | Transparent |
| (4) Appearance confirmation of agent B before curing | | Transparent | Transparent | Transparent | Transparent | Transparent | Transparent | Transparent | Transparent | Transparent |

From the results of Examples 1 to 5 in Table 1, it could be confirmed that the two-part curable resin composition of the present invention is excellent in room temperature curability and can suppress coloring of a cured product.

Comparative Examples 1 to 4 are two-part curable resin compositions using b'1 to b'4 as comparative components other than the component (b) of the present application, but were inferior in room temperature curability or appearance confirmation of a cured product.

### Industrial Applicability

Since the two-part curable resin composition of the present invention is excellent in room temperature curability and can suppress coloring of a cured product, the two-part curable resin composition is suitably used for various use applications such as an adhesive, an encapsulant, a sealant, a potting agent, a coating agent, and an electrically conductive paste. Therefore, the two-part curable resin composition can have a wide field of application, and thus is industrially useful.

The present application is based on Japanese Patent Application No. 2021-206146 filed on December 20, 2021, the disclosure content of which is incorporated herein by reference in its entirety.

## Claims

1. A two-part curable resin composition comprising the following agents A and B:
the agent A: a composition containing a component (a) and a component (b)
the component (a): an epoxy resin having two or more epoxy groups in one molecule
the component (b): an alkoxide-based aluminum catalyst
the agent B: a composition containing a component (c) and a component (d)
the component (c): an organic polymer having two or more hydrolyzable silyl groups
the component (d): a curing agent for the component (a).

2. The two-part curable resin composition according to claim 1, wherein the component (a) is a hydrogenated epoxy resin having two or more epoxy groups in one molecule as a component (a-1) and/or a bisphenol-type epoxy resin having two or more epoxy groups in one molecule as a component (a-2).

3. The two-part curable resin composition according to claim 1 or 2, wherein the hydrolyzable silyl group in the component (c) is a dimethoxysilyl group or a trimethoxysilyl group.

4. The two-part curable resin composition according to claim 1 or 2, wherein when the agent B is mixed in a range of 10 to 300 parts by mass with respect to 100 parts by mass of the agent A, an amount of the component (c) is 10 to 250 parts by mass with respect to 100 parts by mass of the component (a).

5. The two-part curable resin composition according to claim 1 or 2, wherein the component (d) is an amine compound that is a liquid at 25°C.

6. The two-part curable resin composition according to claim 2, wherein a mass ratio of the component (a-1) and the component (a-2) is 20 : 80 to 80 : 20.

7. A cured product obtained by curing the two-part curable resin composition according to claim 1 or 2.
